# EUROPÄISCHE PATENTSCHRIFT

(11) **EP 1 394 563 B1**
(45) Veröffentlichungstag und Bekanntmachung des Hinweises auf die Patenterteilung: **10.06.2009**
(21) Anmeldenummer: 03013029.8
(22) Anmeldetag: 10.06.2003
(51) Int. Cl.: H01Q 3/26

(54) **Online Kalibrierung eines Radarsensors mit Gruppenantenne**
Online calibration of a phased array antenna for radar
Etalonnage en ligne d'un réseau d'antennes à commande de phase

(30) Priorität: 21.08.2002 DE 10238213
(43) Veröffentlichungstag der Anmeldung: 03.03.2004
(73) Patentinhaber: ROBERT BOSCH GMBH, 70442 Stuttgart (DE)
(72) Erfinder: Focke, Thomas, 31180 Ahrbergen (DE); Gross, Volker, 33699 Bielefeld (DE); Brueggemann, Oliver, 31241 Ilsede (DE)

(56) Entgegenhaltungen:
- EP-A- 0 805 510
- DE-A- 19 941 473
- GB-A- 2 259 778
- AUMANN H M ET AL: "PHASED ARRAY ANTENNA CALIBRATION AND PATTERN PREDICTION USING MUTUAL COUPLING MEASUREMENTS" IEEE TRANSACTIONS ON ANTENNAS AND PROPAGATION, IEEE INC. NEW YORK, US, Bd. 37, Nr. 7, 1. Juli 1989 (1989-07-01), Seiten 844-850, XP000035980 ISSN: 0018-926X
- SHIPLEY C ET AL: "Mutual coupling-based calibration of phased array antennas" PHASED ARRAY SYSTEMS AND TECHNOLOGY, 2000. PROCEEDINGS. 2000 IEEE INTERNATIONAL CONFERENCE ON DANA POINT, CA, USA 21-25 MAY 2000, PISCATAWAY, NJ, USA,IEEE, US, 21. Mai 2000 (2000-05-21), Seiten 529-532, XP010504647 ISBN: 0-7803-6345-0
- TIE GAO ET AL: "Large phased array antenna calibration using mutual coupling method" IEEE, 15. Oktober 2001 (2001-10-15), Seiten 223-226, XP010577808

## Beschreibung

### Stand der Technik

Die Erfindung geht aus von einem Verfahren zum Kalibrieren einer Gruppenantenne mit einer Sendeantenne und einer Mehrzahl von Empfangsantennen-Elementen eines Pulsecho-Radarsystems.

Aus dem Aufsatz "Antenna Array Calibration Employing Calibration Beacons and Steering Vector Estimation" von Mark Wiegmann, veröffentlicht in IEE Eleventh International Conference on Antennas and Propagation (ICAP 2001), 17. - 20. April 2001, Manchester, UK, ist ein Kalibrierverfahren für Gruppenantennen bekannt.

Durch Alterungs-, Temperatur- und andere Umwelteinflüsse kommt es bei den eingangs genannten Gruppenantennen im Laufe ihres Betriebs in der Regel zu Amplituden- und Phasenfehlern sowohl zwischen den Inphasen- u. Quadraturphasen Komponenten der jeweiligen Antennenpfade, als auch zwischen den Einzelkanälen der Gruppenantenne. Da Gruppenantennen im Stand der Technik für Positionsbestimmungen eingesetzt werden, ist aufgrund dieser Fehler eine zuverlässige und ausreichend genaue Positionsbestimmung nicht immer gewährleistet. Abgesehen von einer bereits bei der Inbetriebnahme von Sensoren mit Gruppenantennen vorgenommenen Offline-Kalibrierung, die die einzelnen Sende- und Empfangszweige aufeinander abgleicht, muss daher von Zeit zu Zeit eine so genannte Online Kalibrierung der Gruppenantenne als "Nachkalibrierung" durchgeführt werden, um die vorgenannten Fehler auszugleichen. Dabei wird eine Ausgleichsrechnung in einer Auswertelogik der Gruppenantenne vorgenommen, die die im Laufe der Zeit vorgekommenen Fehler kompensiert.

Die eingangs genannte Veröffentlichung bildet einschlägigen Stand der Technik für ein solches Kalibrierungsverfahren, das jedoch in nachteilhafter Weise die Präsenz von Referenzzielen mit bekannter Position voraussetzt, eine Randbedingung,-die eine solche nachträgliche Online-Kalibrierung sehr aufwändig werden lässt.

Die Veröffentlichung "Phased array Antenna Calibration and Pattern Prediction Using Mutual Coupling Measurements", Herbert M. Aumann et al, in 8082 IEEE Transactions on Antennas and Propagation, 37 (1989) July, No. 7, New York, US offenbart einen Gegenstand gemäß Oberbegriff des Anspruchs 1. Diese Veröffentlichung offenbart ein Verfahren zum Kalibrieren einer Gruppenantenne, bei dem die systeminhärente, gegenseitige Einkopplung von Strahlungsmustern in Gruppenelemente, das heißt Sende- und Empfangsantennenelemente, verwendet wird.

### Vorteile der Erfindung

Mit den Maßnahmen der Ansprüche 1 und 6 wird eine **vereinfachte** Online-Kalibrierung erreicht, die ohne ein Referenzziel mit bekannter Postition auskommt. Dadurch ist es möglich, das erfindungsgemäße Verfahren oder ein dieses Verfahren implementierende Pulsradarsystem insbesondere im Bereich der Fahrzeugumfeld-Sensorik einzusetzen, und die darin vorhandene Gruppenantenne beliebig oft bei Bedarf oder automatisiert nachzukatibrieren, ohne dass dies für den Benutzer des Fahrzeugs einen spürbaren Aufwand erzeugt, da das erfindungsgemäße Kalibrierverfahren rein rechnerisch mit den ohnehin vorhandenen Rechenressourcen ohne extern erforderliche Referenzquellen oder Referenzzeitpunkte erfolgen kann.

In den Unteransprüchen sind vorteilhafte Ausgestaltungen, Weiterbildungen und Verbesserungen des jeweiligen Gegenstandes der Erfindung angegeben.

In einem Pulsecho-Radarsystem werden erfindungsgemäß systemimmanente Signalformen der eingesetzten Radarstrahlung in Form ihres Startpulses zur Online-Kalibrierung eines Einzelpfades sowie der Einzelpfade zueinander ausgenutzt. Eine Triggerschaltung stellt die dafür notwendige zeitlich exakte Aussendung des Wellenpaketes des Radarpulses sicher.

Grundsätzlich lässt sich gemäß der vorliegenden Erfindung der Startpuls für die Online-Kalibrierung so verwenden, dass er vorzugsweise in allen Empfangskanälen der Gruppenantenne aufgenommen wird.

Es lassen sich dann mithilfe des erfindungsgemäßen Verfahrens zwei unterschiedliche Phänomene, die zur eingangs beschriebenen Performance-Degradation von Gruppenantennen und der zugehörigen Radarsignalverarbeitung führen, kalibrieren, nämlich zum Einen ein Amplituden-mismatch zwischen Inphasen- und Quadraturphasenkomponente für jeden Antennenpfad und zum Anderen Amplituden- und Phasenfehler zwischen den Einzelelementpfaden der Gruppenantenne.

### Zeichnungen

Anhand der Zeichnungen werden Ausführungsbeispiele der Erfindung erläutert.

Es zeigen
- Fig. 1: ein Zeitsignal eines Antennenelementpfades im Basisband zur Illustration des Startpulses,
- Fig. 2: eine Prinzipskizze für einen Sensoraufbau gemäß einem bevorzugten Ausführungsbeispiel der Erfindung, und
- Fig. 3: eine schematische Abbildung zur Illustration der Direktkopplung von Sendeantenne auf die Empfangsantennenelemente sowie die Verkopplungen zwischen den Elementen der Empfangsgruppenantenne.

### Beschreibung von Ausführungsbeispielen

In den Figuren bezeichnen gleiche Bezugszeichen gleiche oder funktionsgleiche Komponenten.

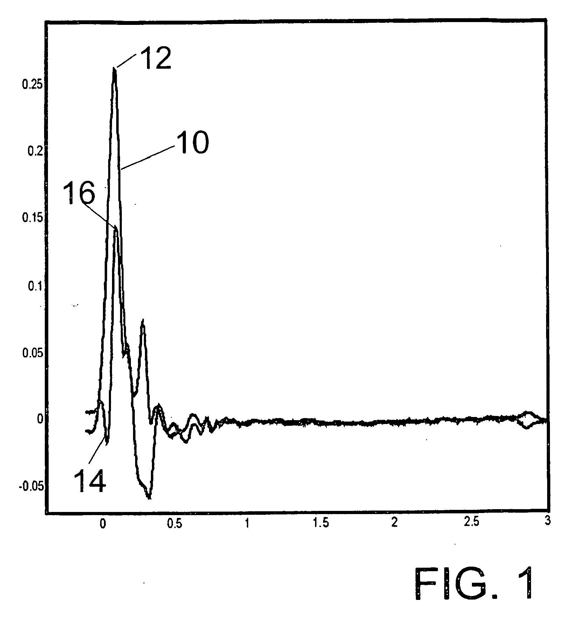

**Fig. 1** ist die Darstellung eines Zeitsignals eines erfindungsgemäß ausgestatteten Pulsecho-Radarsystems mit einer Gruppenantenne, die erfindungsgemäß ohne Referenzziel mit bekannter Position kalibrierbar ist, wobei die y-Achse seine Amplitude in Volt angibt, die x-Achse eine Entfernung in Metern angibt, wie sie sich durch Umrechnung aus der Laufzeit des Signals ergibt.

Genauer zeigt Fig. 1 das Zeitsignal ausschnittsweise, wie es in einem einzelnen (von mehreren) Empfangselementpfaden aufgenommen wurde. Das mit Bezugszeichen 10 abgebildete Signal ist die Inphasenkomponente des erfindungsgemäß genutzten Startpulses, wie er in einem Empfangsantennenelement der Gruppenantenne aufgenommen wurde. Deutlich ist der Peak 12 seiner Inphasenkomponente I zu erkennen, der dem Startpuls selbst entspricht. Die Quadraturphasenkomponente Q des Startpulses, wie sie im gleichen Empfangsantennenelement aufgenommen wurde, ist mit Bezugszeichen 14 bezeichnet. Der dem Startpuls entsprechende Peak 16 dieser Komponente Q ist von der Amplitude her deutlich niedriger. Aufgrund der Unterschiede in der Amplitude der beiden Peaks kann erfindungsgemäß ein Amplituden-mismatch zwischen den beiden Komponenten I und Q des Einzelpfades erkannt und digital korrigiert werden, wie weiter unten beschrieben wird.

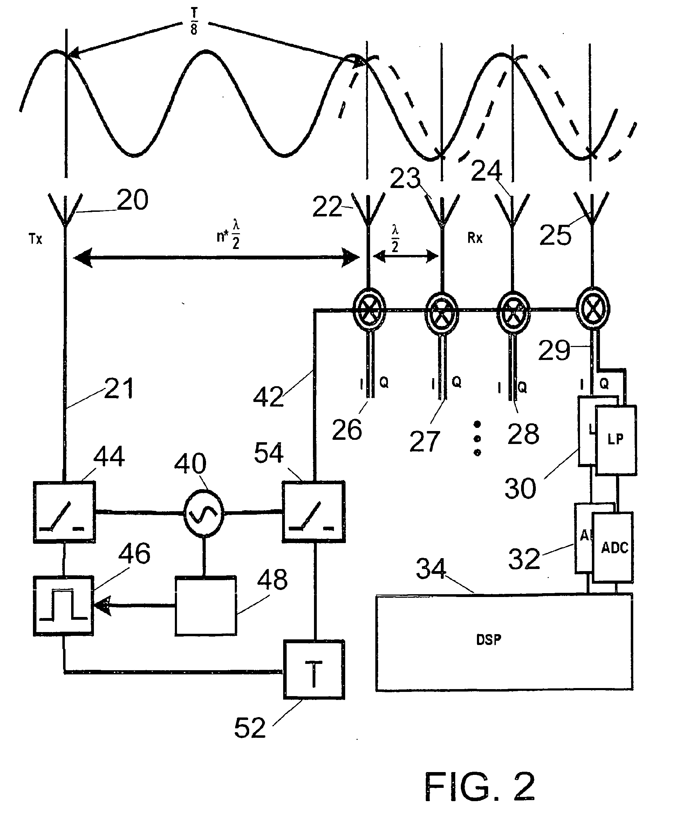

**Fig. 2** zeigt eine Prinzipskizze für einen erfindungsgemäßen Sensoraufbau, bei dem das erfindungsgemäße Kalibrierverfahren erfolgreich angewendet werden kann. Der im oberen rechten Teil der Figur 2 abgebildete Teil entspricht der Empfangsgruppenantenne selbst, der untere Teil stellt schematisch eine zugehörige Schaltskizze dar, die die wesentlichen, funktionalen Einheiten für das erfindungsgemäße Verfahren zeigt.

Ein Abstrahlelement 20 ist vorgesehen. Die Gruppenantenne weist eine Mehrzahl von Empfangselementen 22, 23, 24, 25 auf, die über einen jeweiligen Empfangszweig 26, 27, 28, 29 verfügen, der die oben genannten Signale, nämlich Inphasenkomponente I und Quadraturphasenkomponente Q für eine Weiterverarbeitung der Signale gemäß Stand der Technik in eine jeweils für I und Q separat vorgesehenen Tiefpassfilter 30 (LP) und eine Analog-/ Digitalwandlerkomponente 32 (ADC) weiterführt. Die letzt genannten Komponenten 30 und 32 sind für jeden der Empfangszweige 26 bis 29 vorgesehen, aber aus Gründen einer besseren Übersichtlichkeit nur für einen Zweig dargestellt.

Ein digitaler Signalprozessor 34 ist mit jedem der Empfangszweige verbunden und führt eine mehrkanalige Signalverarbeitung durch, wodurch die erfindungsgemäße Nachkalibrierung selbst vollzogen wird.

Zur Bestimmung der Einfallsrichtung eines Signals an einer Gruppenantenne ist grundsätzlich die Auswertung komplexer Signale notwendig. Die Winkelinformation zur Bestimmung der Einfallsrichtung verschiedener Signale an den Empfangsantennenelementen 22 bis 25 wird aus der Phaseninformation der einzelnen, einlaufenden Signale gewonnen. Die Phaseninformation selbst wird aus dem Amplitudenvergleich der Inphasen- und Quadraturphasenkomponente des einlaufenden Signals gewonnen. Eine Verfälschung der Amplituden aufgrund der eingangs genannten Alterungs-, Temperatur- und anderen Umwelteinflüssen führt somit zwangsläufig zu einer Verfälschung der Phaseninformation.

Das mit Bezugszeichen 20 gekennzeichnete Sendeantennenelement stellt die Abstrahlvorrichtung dar. Im Gegensatz dazu entspricht jedes der in Fig. 2 dargestellten Empfangselemente 22 bis 25 einem Array, vorzugsweise der gleichen Mehrzahl, beispielsweise 4, von regelmäßig linear angeordneten einzelnen Empfangselementen. Eine solche Anordnung ist im Stand der Technik bekannt.

Ein für das vorliegende Kalibrierverfahren vorteilhafter Aufbau der Gruppenantenne ist wie folgt:

Die einzelnen Antennenelemente des Empfangsarrays 22 bis 25 sind im Abstand von einer halben Wellenlänge der Trägerfrequenz von beispielsweise 24 Gigahertz zueinander angeordnet.

Des weiteren ist in vorteilhafter Weise die Sendeantenne 20 in einem vordefinierten Abstand zum ersten Empfangsantennenelement 22 angeordnet, wobei der Abstand günstiger Weise auch der halben Wellenlänge der Trägerfrequenz entspricht. Statt der halben Wellenlänge kann als Abstand auch ein ganzzahliges Vielfaches n dessen gewählt werden, wie dargestellt. Alternativ können auch andere Abstände gewählt werden, die dann jeweils spezifische Folgeänderungen im weiteren Verlauf des Kalibrierverfahrens nach sich ziehen, und dem Fachmann bekannt sind.

Bei vorgewähltem Abstand der halben Wellenlänge oder eines Vielfachen davon zwischen Sendeantenne und Empfangs-Array und den einzelnen Empfangsspalten soll nun erfindungsgemäß ein Radarwellenpaket immer zum Zeitpunkt T/8 der Trägerschwingung gestartet werden, wobei T der Trägerschwingungszeit entspricht. Dann ergibt sich an allen Empfangselementen ein Eingangssignal, dessen Inphasenkomponente I und Quadraturphasenkomponente Q Amplituden besitzen, die idealer Weise gleich groß sind. In diesem Idealfall wäre eine erfindungsgemäße Nachkalibrierung nicht notwendig. Eine Abweichung der Amplituden von I und Q des Startpulses von einem zu dem Phasenversatz passenden Referenzwert kann also detektiert und korrigiert werden.

Im einzelnen ist eine Abweichung der Amplitudengrößen voneinander aus den eingangs genannten Einflüssen mittels im Stand der Technik bekannter Verfahren - Tiefpassfilterung, A/D-Wandlung und digitale Signalverarbeitung - leicht detektierbar. Diese Abweichung ist nun für jeden Signalpfad vom Betrag her individuell unterschiedlich, je nach im Signalpfad vorkommenden Alterungs- und anderen Einflüssen. Erfindungsgemäß kann nun eine Komponente, oder beide (I, Q) so verändert werden, dass beide Amplituden gleich groß sind, dass heißt, im wesentlichen gleiche digitale Werte besitzen. Analog zu Fig. 1 würden die digitalen Daten, die den beiden Amplituden in Fig. 1 entsprechen, so korrigiert werden, dass die Amplituden gleich groß erscheinen. Wenn die den Amplituden entsprechenden digitalen Werte korrigiert sind, kann die im Stand der Technik bekannte weitere Verarbeitung der Werte zum eigentlichen Einsatzzweck vorgenommen werden.

Die digitale Korrektur kann beispielsweise durch Multiplikation mit einem individuellen Faktor erfolgen.

Eine wesentliche Voraussetzung für eine erfolgreiche erfindungsgemäße Online-Kalibrierung ist es, dass der Startpuls des Wellenpaketes zu einem exakten, vordefinierten Zeitpunkt ausgelöst wird. Dieser Zeitpunkt steht in Relation zum Phasenverlauf des Trägersignals und kann beispielsweise durch eine Triggerung des Pulsradartaktpulses durch die Trägerschwingung selbst erreicht werden.

Wenn die Antennenelemente in Vielfachen von der halben Wellenlänge der Trägerfrequenz angeordnet sind, sollte vorteilhafter Weise sichergestellt sein, dass das Wellenpaket immer zum Zeitpunkt von T/8 der Trägerschwingung ausgesendet wird. Bei anderen geometrischen Abständen ergeben sich entsprechend andere Triggerzeitpunkte im Trägersignal.

Der exakte Startpunkt für das Aussenden des den Startpuls tragenden Wellenpaketes wird durch den in Fig. 2 unten dargestellten Schaltungsaufbau erreicht:

Ein Sinuswellengenerator 40 sendet eine Sinuswelle sowohl in den Sendezweig 21 als auch über einen Signalpfad 42 zu den Empfangszweigen 26 bis 29. Ein Schalter 44 im Sende-Zweig 21 wird getriggert durch einen Rechteckimpuls, dargestellt mit Bezugszeichen 46. Dies geschieht mit einer vorgewählten Pulswiederholfrequenz.

Erfindungsgemäß ist eine Triggerschaltung 48 vorgesehen, die sicherstellt, dass am Sendeantennenelement 20, nach einem Nulldurchgang der Trägerschwingung, der Startpuls immer im Phasenzustand 45° (T/8) gesendet wird. Die Triggerschaltung kann beispielsweise durch eine Frequenzteilerschaltung angesteuert werden. Alternativ und in bevorzugter Weise können auch jeweils Nulldurchgänge im 24 Gigahertz-Trägersignal detektiert werden, wobei dann der Zeitpunkt des Öffnens des Schalters 44 durch die Geometrie und insbesondere die Laufzeitlänge für das Signal im Sendezweig berücksichtigt wird, so dass, wenn das Trägersignal einen Nulldurchgang besitzt, der Startpuls im Phasenzustand von 45° (T/8) abgesendet wird.

Eine Verzögerungsschaltung 52 ist mit einem Schalter 54 verbunden dargestellt, die dafür sorgt, dass die Empfangselemente 22 bis 25 mit einer zum geometrischen Abstand zwischen Sendeelement 20 und jeweiligem Empfangselement 22 bis 25 passenden Zeitversatz eingeschaltet werden, damit der Startpuls so wie beabsichtigt empfangen werden kann. Die eingestellte Verzögerung entspricht also genau der Laufzeit des Radarsignals zwischen dem Sendeantennenelement und einem jeweiligen Empfangselement 22 bis 25.

Die vorgenannte Schaltung ist nun in oben genanntem Sinne gemäß einer vorgewählten Pulswiederholfrequenz aktiv, damit nicht ein einziger Puls zur Auswertung gelangt, sondern wie im Stand der Technik üblich, ein über eine vorgewählte Vielzahl von Pulsen kumuliert aufgenommenes Signal zur Auswertung gelangt.

Die oben genannte Triggerung ist für die meisten, im Stand der Technik bekannten, Radarsensoren auch deshalb notwendig, da sich die Frequenz der Trägerschwingung, bedingt durch Lastwechsel am Oszillatorausgang und bedingt durch Temperatureffekte stetig ändert. Zur Vereinfachung der Triggerung kann das hochfrequente Trägersignal mittels entsprechender, im Stand der Technik bekannter Baugruppen ganzzahlig, beispielsweise um den Faktor 100, geteilt werden. In dem entstehenden, niederfrequenteren Signal wird dann vorzugsweise ein Nulldurchgang detektiert und als Triggerzeitpunkt zur Auslösung des Schaltpulses verwendet, wie oben erwähnt wurde. Bei genauer Berücksichtigung der Laufzeiten der Radartaktpulse zum Schalter 44 und des Wellenpaketes vom Schalter 44 zum Abstrahlelement der Sendeantenne 20 ist es gewährleistet, dass das ausgesendete Wellenpaket immer bei T/8 der Trägerschwingung beginnt, und sich die oben genannten Verhältnisse, die zusätzlich in Fig. 2 graphisch dargestellt sind, an den Empfangselementen 22 bis 25 einstellen.

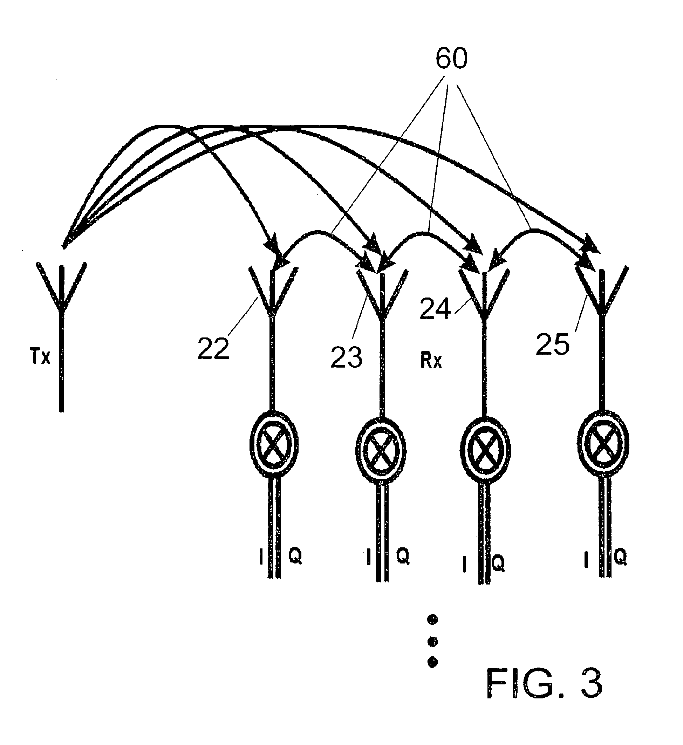

Das erfindungsgemäße Verfahren ist auch für die Kalibrierung der Amplituden- und Phasenfehler zwischen den Einzelelementpfaden der Gruppenantenne geeignet, wie hiernach folgend mit ergänzendem Bezug zu **Fig. 3** beschrieben wird.

Dabei wird davon ausgegangen, dass die Verkopplungen zwischen den einzelnen Elementen der Gruppenantenne zeitlich invariant sind und somit bei der eingangs genannten Offline-Werkskalibrierung erfasst wurden. Sie sind in einem Speicherbereich der Gruppenantenne in Form der so genannten Offline-Kalibriermatrix gespeichert. Damit sind die Amplituden- und Phasenverhältnisse genau bestimmt, die sich bei der Aussendung des Startpulses und der direkten Ausbreitung durch die Luft beziehungsweise durch das Substrat der Gruppenantenne auf die Empfangselemente 22 bis 25 ergeben. Die direkte Kopplung zwischen den einzelnen Empfangselementen ist in Figur 3 schematisch durch die Doppelpfeile 60 dargestellt.

Das erfindungsgemäße Verfahren zur Online-Kalibrierung zwischen den Einzelelementpfaden enthält vorzugsweise die folgenden Schritte, die in den bei Fig. 2 beschriebenen Schaltungselementen 30, 32, 34 durchgeführt werden:

Zunächst wird der Startpuls, wie oben beschrieben, an allen Antennenelementen 22 bis 25 aufgenommen. Dann wird das Startpulssignal gemäß den aus der Offline Kalibrierung bekannten Signalausbreitungsverhältnissen zwischen der Sendeantenne und dem jeweiligen Empfangsantennenelement mit der Offline Kalibriermatrix multipliziert um die Gültigkeit der Kalibrierung zu überprüfen. Ist die Kalibrierung noch gültig, ergibt sich die Einheitsmatrix. Haben sich die Ausbreitungsverhältnisse bzgl. Amplitude u. Phase geändert, d.h. die Kalibrierung ist nicht mehr gültig, ergibt sich ein Fehlervektor. Der Fehlervektor wird schließlich invertiert, und die alte Kalibriermatrix wird mit dem invertierten Fehlervektor multipliziert. Somit ergibt sich die neue Kalibriermatrix, die die Fehler zwischen den Einzelelementpfaden 22 bis 25 ausgleicht.

Wie aus der vorangegangenen Beschreibung ersichtlich, kann eine beliebig wiederholbare Online-Kalibrierung von Amplitudenfehlern zwischen den Phasenkomponenten I und Q sowie von Amplituden- und Phasenfehlern zwischen den einzelnen Kanälen einer Gruppenantenne erfindungsgemäß ohne zusätzlich vorhandene Referenzziele mit fester Ortsvorgabe relativ zur Gruppenantenne durchgeführt werden. Das erfindungsgemäße Verfahren nutzt im System ohnehin vorhandene, physikalische Gegebenheiten in Form des Startpulses aus. Damit können Rechnerressourcen des digitalen Signalprozessors 34 in dem Pulsecho-Radarsystem, die ohnehin vorhanden sind, ausgenutzt werden, um beispielsweise in regelmäßigen Abständen eine Nachkalibrierung der Gruppenantenne vorzunehmen. Die Zuverlässigkeit und Genauigkeit des Pulsecho-Radarsystems wird dadurch in signifikanter Weise erhöht.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Insbesondere können die Parameter T/8, n, λ/2 jeweils passend variiert werden.

Desweiteren ist das erfindungsgemäße Verfahren auch in einer zeitduplexfähigen Gruppenantenne einsetzbar, bei dem die Sendeantennenelemente eine Teilmenge der Empfangselemente sind und abwechselnd gesendet und empfangen wird. Eine Kalibrierung der Empfangspfade bei Zeitduplexsystemen ist möglich. Dazu ist zu gewährleisten, dass im Kalibriermodus eine intelligente Elementeansteuerung dafür sorgt, dass ein Sendeelement nicht gleichzeitig Empfangselement ist.

## Patentansprüche

1. Verfahren zum Kalibrieren einer Gruppenantenne mit einem Sendeantennenelement (20) und einer Mehrzahl von Empfangsantennenelementen (22, 23, 24, 25) eines Putsecho-Radarsystems, mit dem Schritt, einen direkt von dem Sendeantennenetement (20) in die Empfangsantennenelemente (22, 23, 24, 25) übergekoppelten Puls (10, 14) als Referenzsignal für eine Ontinekatibrierung von Amplituden- und Phasenfehlern der Gruppenantenne zu verwenden,
**dadurch gekennzeichnet, dass** der Puls ein Startpuls ist, und zur Kalibrierung von Ampiitudenmismatch zwischen Inphasenkomponente I und Quadraturphasenkomponente Q eines Einzelelementpfades (26, 27, 28, 29) der Gruppenantenne folgende Schritte durchgeführt werden:
a) Aussenden des Startpulses (10,14) zeitlich definiert mit einem vorgegebenen Phasenversatz in bezug auf den Phasenverlauf der Trägerschwingung des Startpulses,
b) Detektieren einer Abweichung der Amplituden von und Q des Startpulses von einem zu dem vorgegebenen Phasenversatz passenden Referenzwert,
c) digitales Korrigieren der Abweichung in einer dem Empfangsantennenelement des Einzelpfades nachgeschalteten Auswerletogik (30, 32, 34) der Gruppenantenne.

2. Verfahren nach dem vorstehenden Anspruch 1, **dadurch gekennzeichnet, dass** der Phasenversatz der Trägerschwingung 450 beträgt, das Sendeantennenelement (20) im Abstand eines ganzzahligen Vielfachen n einer halben Wellenlänge der Trägerschwingung von dem nächsten Empfangsantennenelement (22) angeordnet ist, und die Empfangsantennenelemente (22, 23, 24, 25) ebenfalls in einem Abstand eines ganzzahligen Vielfachen n einer halben Wellenlänge der Trägerschwingung beabstandet sind.

3. Verfahren nach dem vorstehenden Anspruch 2, **dadurch gekennzeichnet, dass** das Aussenden des Startpulses durch eine Triggereinrichtung (46,48) erfolgt, die auf nulldurchgänge im Signalverlauf der Trägerschwingung anspricht.

4. Verfahren nach dem vorstehenden Anspruch 3, **dadurch gekennzeichnet, dass** die Triggerung des Sendezeitpunktes auf einer Frequenzteilung und nachfolgender Nulldurchgangsdetektion des Trägersignals beruht.

5. Verfahren nach Anspruch 1, **dadurch gekennzeichnet, dass** zur Onlinekalibrierung von Amplituden- und Phasenfehlern zwischen der Mehrzahl der Empfangsantennenelementpfade (26, 27, 28, 29) der Gruppenantenne, die folgenden Schritte durchgeführt werden:
a) Empfangen des Startpulssignals (10, 14) an der Mehrzahl der Empfangsantannenelemente (22, 23, 24, 25),
b) Multiplizieren des Startpulssignals (10, 14) gemäß den aus einer Offline Kalibrierung bekannten Signalausbreitungsverhältnissen zwischen dem Sendeantennenelement (20) und dem jeweiligen Empfangsantennenelement (22, 23, 24, 25), ergebend einen Fehlervektor,
c) Aktualisieren der Offline-Kalibriermatrix durch Multiplikation der Matrix mit dem invertierten Fehlervektor.

6. Pulsecho-Radarsystem mit Einrichtungen zur Durchführung des Kalibrierungsverfahrens nach einem der vorstehenden Ansprüche, die Einrichtungen umfassen: eine Gruppenantenne mit einem Sendeantennenelement (20) und einer Mehrzahl von Empfangsantennenelementen (22, 23, 24, 25); einen Generator (40) zum Erzeugen einer Trägerschwingung; eine Triggereinrichtung (46, 48), die auf Nulldurchgänge im Signalverlauf der Trägerschwingung anspricht und einen Schalter (44) im Sendezweig (21) so triggert, dass ein Startpuls mit einem vorgegebenen Phasenversatz in Bezug auf den Phasenverlauf der Trägerschwingung vom Sendeantennenelement (20) angestrahlt wird; und eine einem jeweiligen Empfangsantennenelement (22, 23, 24, 25) nachgeschaltete Auswertelogik (30, 32, 34) zum Detektieren einer Abweichung der Amplituden von Inphasenkomponenten und Quadraturphasenkomponenten des Startpulses von einem zu dem vorgegebenen Phasenversatz passenden Referenzwert und zum digitalen Korrigieren der Abweichung.

## Claims

1. Method for calibration of an antenna array having a transmitting antenna element (20) and having a plurality of receiving antenna elements (22, 23, 24, 25) for a pulse-echo radar system, having the step of using a pulse (10, 14), which is coupled directly from the transmitting antenna element (20) into the receiving antenna elements (22, 23, 24, 25) as a reference signal for online calibration of amplitude and phase errors of the antenna array,
**characterized in that** the pulse is a start pulse and the following steps are carried out for calibration of any amplitude mismatch between the in-phase component I and the quadrature-phase component Q of an individual element path (26, 27, 28, 29) of the antenna array:
a) transmission of the start pulse (10, 14) at a defined time with a predetermined phase offset with respect to the phase profile of the carrier oscillation of the start pulse,
b) detection of any discrepancy between the amplitudes of I and Q of the start pulse and a reference value which matches the predetermined phase offset,
c) digital correction of the discrepancy in evaluation logic (30, 32, 34), which is connected downstream from the receiving antenna element of the individual path, in the antenna array.

2. Method according to the preceding Claim 1, **characterized in that** the phase offset of the carrier oscillation is 45°, the transmitting antenna element (20) is arranged at a distance of an integer multiple n of half a wavelength of the carrier oscillation from the closest receiving antenna element (22), and the receiving antenna elements (22, 23, 24, 25) are likewise separated by a distance of an integer multiple n of half a wavelength of the carrier oscillation.

3. Method according to the preceding Claim 2, **characterized in that** the start pulse is transmitted by means of a trigger device (46, 48) which responds to zero crossings in the signal waveform of the carrier oscillation.

4. Method according to the preceding Claim 3, **characterized in that** the triggering of the transmission time is based on frequency division and subsequent zero-crossing detection of the carrier signal.

5. Method according to Claim 1, **characterized in that** the following steps are carried out for online calibration of amplitude and phase errors between the plurality of the receiving antenna element paths (26, 27, 28, 29) of the antenna array:
a) reception of the start pulse signal (10, 14) at the plurality of receiving antenna elements (22, 23, 24, 25),
b) multiplication of the start pulse signal (10, 14) in accordance with signal propagation conditions, which are known from an offline calibration, between the transmitting antenna element (20) and the respective receiving antenna element (22, 23, 24, 25), resulting in an error vector,
c) updating of the offline calibration matrix by multiplication of the matrix by the inverted error vector.

6. Pulse-echo radar system having devices for carrying out the calibration method according to one of the preceding claims, which devices comprise: an antenna array having a transmitting antenna element (20) and a plurality of receiving antenna elements (22, 23, 24, 25); a generator (40) for production of a carrier oscillation; a trigger device (46, 48) which responds to zero crossings in the signal waveform of the carrier oscillation and triggers a switch (44) in the transmission branch (21) such that a start pulse is transmitted with a predetermined phase offset with respect to the phase profile of the carrier oscillation of the transmitting antenna element (20); and evaluation logic (30, 32, 34), which is connected downstream from a respective receiving antenna element (22, 23, 24, 25), for detection of any discrepancy between the amplitudes of in-phase components and quadrature-phase components of the start pulse and a reference value which matches the predetermined phase offset, and for digital correction of the discrepancy.

## Revendications

1. Procédé d'étalonnage d'une antenne groupée qui présente un élément (20) d'antenne d'émission et plusieurs éléments (22, 23, 24, 25) d'antenne de réception dans un système radar à écho pulsé, qui comporte l'étape qui consiste à utiliser comme signal de référence dans les éléments (22, 23, 24, 25) d'antenne de réception une impulsion (10, 14) ajoutée directement par l'élément (20) d'antenne d'émission pour étalonner en ligne les erreurs d'amplitude et phase de l'antenne groupée,
**caractérisé en ce que**
l'impulsion est une impulsion de démarrage et
**en ce que** pour l'étalonnage du désaccord d'amplitude entre la composante en phase I et la composante en quadrature de phase Q du parcours (26, 27, 28, 29) d'un élément individuel de l'antenne groupée, les étapes suivantes sont exécutées :
a) émission de l'impulsion de démarrage (10, 14) définie temporellement avec un déphasage prédéterminé par rapport à l'évolution de la phase de l'onde porteuse de l'impulsion de démarrage,
b) détection de différence d'amplitude entre le I et le Q de l'impulsion de démarrage par rapport à une valeur de référence adaptée au déphasage prédéterminé et
c) correction numérique de la différence dans une logique d'évaluation (30, 32, 34) de l'antenne groupée, raccordée en aval de l'élément d'antenne de réception du parcours individuel.

2. Procédé selon la revendication 1 qui précède, **caractérisé en ce que** le déphasage de l'oscillation porteuse est de 45°, **en ce que** l'élément (20) d'antenne d'émission est disposé à une distance qui correspond à un multiple entier n d'une demi-longueur d'onde de l'oscillation porteuse par rapport à l'élément (22) suivant d'antenne de réception et **en ce que** les éléments (22, 23, 24, 25) d'antenne de réception sont également disposés à une distance qui correspond à un multiple n entier d'une demi-longueur d'onde de l'oscillation porteuse.

3. Procédé selon la revendication 2 qui précède, **caractérisé en ce que** l'émission de l'impulsion de démarrage s'effectue à l'aide d'un dispositif d'activation (46, 48) qui répond au passage par zéro de l'évolution du signal de l'oscillation porteuse.

4. Procédé selon la revendication 3 qui précède, **caractérisé en ce que** l'activation de l'instant d'émission repose sur une division en fréquence et ensuite sur la détection du passage par zéro du signal porteur.

5. Procédé selon la revendication 1, **caractérisé en ce que** pour l'étalonnage en ligne des erreurs d'amplitude et de phase entre les différents parcours (26, 27, 28, 29) des éléments d'antenne de réception de l'antenne groupée, les étapes suivantes sont exécutées:
a) réception du signal (10, 14) de l'impulsion de démarrage par les différents éléments (22, 23, 24, 25) d'antenne de réception,
b) multiplication du signal (10, 14) de l'impulsion de démarrage en fonction des conditions de propagation du signal, connues à partir d'un étalonnage en ligne, entre l'élément (20) d'antenne d'émission et chaque élément (22, 23, 24, 25) d'antenne de réception, ce qui donne un vecteur d'erreur et
c) mise à jour de la matrice d'étalonnage en ligne par multiplication de la matrice par l'inverse du vecteur d'erreur.

6. Système radar à écho pulsé doté de dispositifs en vue de l'exécution du procédé d'étalonnage selon l'une des revendications précédentes, les dispositifs comprenant :
une antenne groupée qui présente un élément (20) d'antenne d'émission et plusieurs éléments (22, 23, 24, 25) d'antenne de réception,
un générateur (40) qui crée une oscillation porteuse,
un dispositif d'activation (46, 48) qui répond aux passages par zéro de l'évolution du signal de l'oscillation porteuse et qui active un commutateur (44) disposé dans la branche d'émission (21) de telle sorte que l'élément (20) d'antenne d'émission émette une impulsion de démarrage à un déphasage prédéterminé par rapport à l'évolution de la phase de l'oscillation porteuse et
une logique d'évaluation (30, 32, 34) raccordée en aval de chaque élément (22, 23, 24, 25) d'antenne de réception pour détecter une différence d'amplitude entre la composante en phase et la composante en quadrature de phase de l'impulsion de démarrage par rapport à une valeur de référence adaptée au déphasage prédéterminé, et pour corriger numériquement la différence.
